# EUROPÄISCHE PATENTSCHRIFT

(11) **EP 2 310 702 B1**
(45) Veröffentlichungstag und Bekanntmachung des Hinweises auf die Patenterteilung: **13.03.2013**
(21) Anmeldenummer: 09775922.9
(22) Anmeldetag: 29.06.2009
(51) Int. Cl.: F16C 33/58, F16D 21/06, F16D 25/08, F16D 25/12, F16C 33/76

(54) **DOPPELKUPPLUNG**
DUAL CLUTCH
EMBRAYAGE DOUBLE

(30) Priorität: 14.07.2008 DE 102008033035
(43) Veröffentlichungstag der Anmeldung: 20.04.2011
(73) Patentinhaber: Schaeffler Technologies AG & Co. KG, 91074 Herzogenaurach (DE)
(72) Erfinder: NÖHL, Oliver, 77830 Bühlertal (DE); AGNER, Ivo, 77815 Bühl (DE); RADINGER, Norbert, 90475 Nürnberg (DE)
(74) Vertreter: Hoferer, Andreas
(86) Internationale Anmeldenummer: PCT/DE2009/000903
(87) Internationale Veröffentlichungsnummer: WO 2010/006580

(56) Entgegenhaltungen:
- DE-A1- 10 149 702
- DE-A1-102006 057 482
- FR-A- 2 082 870
- US-A1- 2005 205 376

## Beschreibung

Die Erfindung betrifft eine Doppelkupplung mit zwei von einer Antriebseinheit angetriebenen Reibungskupplungen mit einem gemeinsamen Kupplungsgehäuse und einer mit diesem fest verbundenen Anpressplatte mit zwei Anpressflächen sowie zwei jeweils einer Anpressfläche zugewandten, axial verlagerbaren Druckplatten.

Doppelkupplungen mit zwei Reibungskupplungen mit einem Kupplungsgehäuse und einer mit diesem fest verbundenen zentralen Anpressplatte sind Z.B. aus dem DE 101 49 702 bekannt. Dabei werden die Druckplatten von Betätigungseinrichtungen axial verlagert, indem radial innen axial eine Tellerfeder oder Hebelelemente mit einem vorgegebenen Ausrückweg beaufschlagt werden. Dabei stützen sich diese je nach Ausgestaltung der zugeordneten Reibungskupplung als zwangsweise zugedrückte, also zwangsweise geschlossene oder aufgedrückte, also zwangsweise geöffnete Reibungskupplung als einarmiger oder zweiarmiger Hebel am Kupplungsgehäuse unter Ausbildung einer Übersetzung ab, so dass der Axialweg der Betätigungseinrichtung länger als der Weg der Druckplatte vom vollständig geöffneten Zustand der Reibungskupplung, in dem kein Moment übertragen wird, zum vollständig geschlossenen Zustand, bei dem das maximale Moment übertragen wird, ist. Insbesondere in beengten Bauräumen müssen die Betätigungseinrichtungen an diesen verlängerten Betätigungsweg angepasst werden.

Weiterhin ist die exakte Zuordnung eines Axialwegs der Betätigungseinrichtung zu einem Weg der Druckplatte und daher eine Zuordnung des über die Reibungskupplung übertragenen Moments von den elastischen Eigenschaften, insbesondere deren Toleranzen, beispielsweise den Fertigungstoleranzen und Abweichungen über die Lebensdauer, abhängig. Hierdurch steigen die durch diese Toleranzen bedingten Axialwege ebenfalls, da die Axialwege auf die größte Abweichung ausgelegt werden müssen. Des Weiteren nimmt die Zuordnung eines Axialwegs zum tatsächlichen Weg der Druckplatte ab beziehungsweise zeigt eine Hysterese.

Es wird daher eine Doppelkupplung mit zwei von einer Antriebseinheit angetriebenen Reibungskupplungen mit einem gemeinsamen Kupplungsgehäuse und einer mit diesem fest verbundenen Anpressplatte mit zwei Anpressflächen sowie zwei jeweils einer Anpressfläche zugewandten, axial verlagerbaren Druckplatten vorgeschlagen, wobei zwischen jeweils einer Druckplatte und der Anpressplatte Reibbeläge einer mit jeweils einer Getriebeeingangswelle eines Getriebes drehfest verbundenen Kupplungsscheibe zur Bildung eines Reibeingriffs durch axiale Beaufschlagung der Druckplatten mittels jeweils einer Betätigungseinrichtung verspannbar sind und die Druckplatten mittels von den Betätigungseinrichtungen beaufschlagten Übertragungselementen betätigt werden und die Druckplatten um denselben an den Betätigungseinrichtungen eingestellten Betätigungsweg verlagert werden.

Dies bedeutet, dass sich die Übertragungselemente nicht als Hebel an dem Kupplungsgehäuse abstützen sondern in einer im Wesentlichen senkrecht zur Rotationsachse der Doppelkupplung verlaufenden Verlagerung den von den Betätigungseinrichtungen aufgeprägten Axialweg in einen betrags- und richtungskonformen Weg der Druckplatte umsetzen. Dabei sind die Übertragungselemente vorzugsweise als scheibenförmige, steife Kolbenbleche ausgebildet, die an ihrem Innenumfang von den Betätigungseinrichtungen beaufschlagt werden und radial außerhalb die Druckplatte verlagern.

Infolge der direkten Betätigung der Druckplatten ohne eine Hebelübersetzung der Übertragungselemente werden die zwischen den Betätigungseinrichtungen und den Übertragungselementen angeordneten Betätigungslager hohen Belastungen ausgesetzt. Infolgedessen entsteht eine hohe Reibungswärme insbesondere bei einer hohen Anzahl von Kupplungsvorgängen, beispielsweise im Stadtverkehr, in den Betätigungslagern, die insbesondere bei fettbefüllten, gekapselten Betätigungslagern schlecht abgeführt werden kann.

Aufgabe der Erfindung ist daher, eine Doppelkupplung vorzuschlagen, deren Betätigungslager in verbesserter Weise geschmiert und gegebenenfalls gekühlt werden.

Die Erfindung wird durch eine Doppelkupplung mit zwei von einer Antriebseinheit angetriebenen Reibungskupplungen mit einem gemeinsamen Kupplungsgehäuse und einer mit diesem fest verbundenen Anpressplatte mit zwei Anpressflächen sowie zwei jeweils einer Anpressfläche zugewandten, axial verlagerbaren Druckplatten gelöst, wobei zwischen jeweils einer Druckplatte und der Anpressplatte Reibbeläge mit jeweils einer Getriebeeingangswelle eines Getriebes drehfest verbundenen Kupplungsscheibe zur Bildung eines Reibeingriffs durch axiale Beaufschlagung der Druckplatten mittels jeweils einer axial fest und verdrehbar mittels eines Stützlagers am Kupplungsgehäuse aufgenommenen Betätigungseinrichtung verspannbar sind, die Druckplatten mittels von den Betätigungseinrichtungen beaufschlagten Übertragungselementen betätigt werden, die Druckplatten um denselben an den Betätigungseinrichtungen eingestellten Betätigungsweg verlagert werden und zwischen einem Außenring des Stützlagers und einem Innenumfang der Betätigungseinrichtungen ein dichter Ringraum gebildet ist. Hierzu wird der zwischen den Übertragungselementen und den Betätigungslagem vorgesehene, nach außen abgedichtete Ringraum in der Weise ausgebildet, dass dieser die Betätigungslager zumindest einseitig umfasst. Dabei wird der Ringraum zumindest teilweise mit einem Fluid befüllt, so dass das Kühlvolumen der Betätigungslager zunimmt. Dabei kann das Fluid den Anforderungen entsprechend schmierende und/oder kühlende Eigenschaften aufweisen.

Als Antriebseinheit kann beispielsweise eine Brennkraftmaschine mit einer Kurbelwelle und/oder eine Elektromaschine mit einer Antriebswelle dienen. In Kombination kann ein hybridischer Antrieb vorgesehen sein, bei dem alternativ oder einander ergänzend zumindest eine Brennkraftmaschine und zumindest eine Elektromaschine die Antriebseinheit bilden.

Die beiden Reibungskupplungen sind vorzugsweise trockene Einscheibenkupplungen mit jeweils einer metallischen Reibfläche an der Anpress- und an den Druckplatten sowie Reibbeläge tragende, Gegenreibflächen bildende Kupplungsscheiben. Die Reibbeläge der Kupplungsscheiben sind bevorzugt mit einer Belagfederung ausgestattet, weiterhin werden die Druckplatten axial verlagerbar entgegen der Wirkung von Energiespeichern wie beispielsweise Blattfedern geschlossen, so dass während des Öffnens einer Reibungskupplung die zugehörige Druckplatte in Öffnungsrichtung verlagert wird.

Zumindest eine der beiden Reibungskupplungen ist dabei selbstöffnend ausgestaltet. Dies bedeutet, dass bei einer Entlastung der Betätigungseinrichtung die Reibungskupplung vom geschlossenen in den geöffneten Zustand übergeht. In bevorzugter Weise werden beide Reibungskupplungen als zwangsweise geschlossene, also von der jeweiligen Betätigungseinrichtungen zugedrückte oder zugezogene Reibungskupplung ausgestaltet, so dass beide Reibungskupplungen selbstöffnend sind, sobald eine Betätigungseinrichtung, beispielsweise infolge eines Defekts nicht mehr in Funktion ist.

Die beiden Betätigungseinrichtungen können mittels einer gemeinsamen Aufnahme um die beiden Getriebeeingangswellen angeordnet sein. Hierbei hat es sich als vorteilhaft gezeigt, wenn die Aufnahme verdrehbar am Kupplungsgehäuse aufgenommen und an einem Getriebegehäuse des Getriebes drehfest abgestützt ist. Es kann damit eine gehäusefeste Aufnahme der Betätigungseinrichtungen vorgeschlagen werden, die die Abstützkraft in das Kupplungsgehäuse einleiten, so dass die Doppelkupplung einen in sich geschlossenen Kraftkreislauf der Anpresskräfte und Gegenkräfte zur Verlagerung der Druckplatte und der Ausbildung des Reibschlusses zur Übertragung des Drehmoments von dem Kupplungsgehäuse auf die Kupplungsscheiben bildet. Insoweit ist die Doppelkupplung unabhängig von Toleranzschwankungen, beispielsweise einem Versatz von Kurbelwelle und Getriebeeingangswellen. Hierdurch können die Axialwege exakt ausgelegt und Schwingungen sowie andere Einflüsse, die durch eine Lagerung der Betätigungseinrichtungen am Getriebegehäuse resultieren, beispielsweise der Eintrag von Getriebeschwingungen oder Axialschwingungen der Brennkraftmaschine, die zu einem Pumpen zwischen der Doppelkupplung und den getriebefest montierten Betätigungseinrichtungen führt, vermieden werden.

Weiterhin hat sich als vorteilhaft gezeigt, wenn das Kupplungsgehäuse verdrehbar am Getriebegehäuse abgestützt ist. Hierzu kann das Kupplungsgehäuse dem Getriebe zugewandt einen axialen Ansatz aufweisen, an dem die Aufnahme aufgenommen und mittels dessen die Doppelkupplung am Getriebegehäuse verdrehbar abgestützt ist. Ein derartiger Ansatz erfolgt bevorzugt radial innen, beispielsweise auf radialer Höhe der Betätigungseinrichtungen, wobei das Kupplungsgehäuse an einem aus dem Getriebegehäuse axial auskragenden Ansatz mittels eines Radiallagers axial fest aufgenommen ist. Zum Ausgleich von Axialschwingungen der Getriebeseite gegenüber der Antriebsseite kann die Doppelkupplung axial begrenzt, vorzugsweise entgegen der Wirkung eines axial wirksamen Energiespeichers direkt an der Kurbelwelle oder unter Zwischenschaltung eines Drehschwingungsdämpfers, beispielsweise eines Zweimassenschwungrads, drehfest, beispielsweise mittels einer Steckverzahnung aufgenommen sein.

Durch die Abstützung der Doppelkupplung am Getriebegehäuse wird eine Abstützung der Doppelkupplung auf einer der beiden Getriebeeingangswellen vermieden, so dass diese keine Biegebelastung durch die Doppelkupplung erfahren und diesbezüglich keiner separaten Auslegung bedürfen. Weiterhin werden dadurch weder Schwingungen, beispielsweise Taumelschwingungen, vom Getriebe in die Doppelkupplung noch von der Doppelkupplung auf diese Weise in das Getriebe übertragen. Das Getriebe kann ein Getriebe mit einem Haupt- und einem Nebenabtrieb sein. In bevorzugter Weise wird die Doppelkupplung jedoch für ein Doppelkupplungsgetriebe mit zwei Teilantriebssträngen zur Bildung eines Lastschaltgetriebes eingesetzt, bei dem jeweils ein Teilantriebsstrang bei einem eingelegten Gang Moment von der Antriebseinheit bei geschlossener Reibungskupplung auf die Räder eines Kraftfahrzeugs überträgt und in dem anderen Teilantriebsstrang bei geöffneter Reibungskupplung ein nachfolgender Gang eingelegt beziehungsweise nach dem Einlegen im eingelegten Zustand bereitgehalten wird. Eine Schaltung erfolgt durch Überschneidung der beiden Reibungskupplungen der Doppelkupplung, wobei die geschlossene Reibungskupplung schlupfend geöffnet und die geöffnete Reibungskupplung schlupfend geschlossen wird, so dass während der Überschneidung über beide Teilantriebsstränge wechselnde Teilmomente übertragen werden.

Es hat sich als vorteilhaft gezeigt, wenn beide Reibungskupplungen zwangsweise geschlossene Reibungskupplungen sind, um ein Verblocken des Doppelkupplungsgetriebes bei Ausfall einer Betätigungseinrichtung insbesondere während einer Überschneidungsschaltung zu vermeiden. Aufgrund der vorteilhaften Anordnung einer zentralen Anpressplatte mit gegenüberliegenden Druckplatten der Reibungskupplung werden die Betätigungswege zum Schließen der Reibungskupplungen in ihrer Funktion zueinander entgegengesetzt angeordnet.

Durch die Aufnahme der Doppelkupplung am Getriebegehäuse und den Entfall der Lagerung dieser auf einer der beiden koaxial zueinander angeordneten Getriebeeingangswellen kann die zwischen der Kurbelwelle und der zentralen Anpressplatte angeordnete Betätigungseinrichtung geführt, angeordnet oder versorgt werden. Dies bedeutet, dass ungestört von einer Lagerung der Doppelkupplung im Raum zwischen Getriebeeingangswellen und den radial außen angeordneten, den Reibeingriff bildenden Elementen wie Druckplatten und Anpressplatte sowie axial zwischen den Kupplungsscheiben und dem Getriebegehäuse ein zusammenhängender Bauraum zur Aufnahme der beiden, bevorzugt in einer Aufnahme aufgenommenen Betätigungseinrichtungen bereitgestellt werden kann. In vorteilhafter Weise kann hierzu die der Aufnahme benachbarte Kupplungsscheibe axial beabstandet zu den Reibbelägen auf der als Hohlwelle ausgeführten, zugehörigen Getriebeeingangswelle aufgenommen sein, so dass der Bauraum zusätzlich vergrößert werden kann.

Die Betätigungseinrichtungen können mechanische Hebelvorrichtungen sein, die von radial außen beispielsweise elektromotorisch betrieben werden. Besonders vorteilhaft ist eine pneumatische oder bevorzugt hydrostatische Betätigung der Doppelkupplung, wobei die gemeinsame Aufnahme der Betätigungseinrichtungen durch ein Nehmerzylindergehäuse, in dem zur Beaufschlagung jeweils eines Übertragungselements jeweils ein von außen druckbeaufschlagter Nehmerzylinder untergebracht ist, gebildet wird. Die Nehmerzylinder weisen hierzu jeweils einen Ringkolben auf, der axial in einer von außen druckbeaufschlagbaren Druckkammer verlagerbar ist und unter Zwischenschaltung eines Betätigungslagers die Übertragungselemente betätigt.

Die Druckkammern der Nehmerzylinder werden beispielsweise von jeweils einem Geberzylinder, der mittels eines Elektromotors von einem Steuergerät gesteuert wird, oder von einer Pumpe, gegebenenfalls unter Mitwirkung eines Druckspeichers, beaufschlagt, wobei die Pumpe von der Antriebseinheit oder von einem Elektromotor betrieben werden kann. In vorteilhafter Weise kann ein sogenanntes Powerpack eingesetzt werden, das über eine zentrale Pumpe und entsprechenden Ventilen mehrere Druckkreisläufe schaltet, wobei beide Reibungskupplungen betätigt werden und die Beschaltung des Getriebes und die Umlaufschmierung des Ringraums erfolgen können.

Der Ringraum wird in vorteilhafter Weise so ausgebildet, dass eine Abdichtung zwischen dem im Betrieb drehenden Kupplungsgehäuse und dem feststehenden, am Kupplungsgehäuse mittels des Stützlagers verdrehbar aufgenommenen Nehmerzylindergehäuse in einfacher Weise erfolgen kann. Es hat sich dabei als vorteilhaft erwiesen, sowohl das Stützlager als auch die Betätigungslager beziehungsweise die Abwälzflächen dieser in den Ringraum aufzunehmen.

Hierzu kann in einem vorteilhaften Ausführungsbeispiel der Ringraum zwischen dem Kupplungsgehäuse oder einem mit diesem verbundenen Bauteil und den Außenumfängen der Ringkolben mittels jeweils einer Dichtung, die den Hub des Ringkolbens gegenüber dem axial feststehenden Kupplungsgehäuse ausgleicht, beispielsweise mittels eines Radialwellendichtrings, abgedichtet sein. Dabei kann der Ringraum auf der Seite des Kupplungsgehäuses an einem Außenring des Stützlagers abgedichtet werden, so dass eine Baueinheit mit dem die Ringkolben und die Betätigungslager enthaltenden Nehmerzylindergehäuse und dem Stützlager gebildet werden kann, die bereits vollständig einen das entsprechende Schmiermittel wie Öl oder Fett enthaltenden Ringraum umfasst und während der Montage der Doppelkupplung als Ganzes verbaubar ist.

Dabei können die radial äußeren Lagerringe der Betätigungslager gegenüber dem feststehenden Ringkolben mittels eines Radialwellendichtrings abgedichtet sein, wobei an diesen Lagerringen an deren Innenumfang entsprechende axiale hülsenförmige Ansätze vorgesehen sind, die die Ringkolben radial innen übergreifen, wobei bevorzugt der Radialwellendichtring an den Ringkolben axial fest angeordnet ist, welcher auf einer Dichtfläche der Außenringe dichtet.

Neben dieser rotatorischen Dichtung können die Lagerringe der Betätigungslager gegenüber einem Außenring des Stützlagers mittels einer translatorischen Abdichtung abgedichtet sein, so dass die Dichtaufgabe einer rotatorischen und axial gleitenden Dichtung zwischen dem drehenden Kupplungsgehäuse mit den mit diesem drehenden und zu diesem axial verlagerbaren Übertragungselementen in eine axial feste, relativ drehende und nicht drehende axial verlagernde Dichtung in vorteilhafter Weise aufgeteilt werden kann.

Hierzu kann in einem vorteilhaften Ausführungsbeispiel an den Lagerringen der Betätigungslagerjeweils ein axialer, zu einem Ringflansch des Lagerrings des Stützlagers koaxial ausgeformter Ringflansch gebildet und zwischen den Ringflanschen jeweils eines Lagerrings eines Betätigungslagers und jeweils einem der Ringflansche des Lagerrings des Stützlagers eine translatorische Abdichtung wirksam sein. Diese Ringflansche können radial innerhalb der Wälzkörper des Stützlagers angeordnet sein. Die translatorische Dichtung kann dabei aus einer Dichtlippe gebildet sein, die an einem Ringflansch, beispielsweise dem Außenring des Stützlagers zugeordneten Ringflansch, fest angeordnet sein und gegenüber einer Dichtfläche am korrespondierenden Ringflansch dichten.

In einem weiteren Ausführungsbeispiel kann vorgesehen sein, dass die Lagerringe der Betätigungslager radial außerhalb der Wälzkörper des Stützlagers die translatorische Abdichtung zum Lagerring des Stützlagers bilden, indem beispielsweise am Außenumfang der Lagerringe eine Dichtlippe angeordnet ist, die gegenüber einem Innenumfang des Lagerrings abdichtet.

In einem weiteren Ausführungsbeispiel kann vorgesehen sein, dass zwischen dem Kupplungsgehäuse oder dem Lagerring des Stützlagers und den Lagerringen der Betätigungslager jeweils eine elastische Membran angeordnet ist. Eine derartige elastische Membran kann aus Kunststoff- oder Gummimaterial gebildet sein und einen Faltenbalg, eine Rollmembran oder einen Pendelbalg ausbilden. In vorteilhafter Weise wird hierbei auf zumindest einer, bevorzugt auf beiden Seiten des Stützlagers, eine elastische Membran an einem Außenumfang des Stützlagers und an jeweils einem Innenumfang des Lagerrings des jeweiligen Betätigungslagers aufgenommen. Zur Stabilisierung der Verbindung zwischen den Lagerringen und der Membran kann diese die Lagerringe umgreifend, mit einem Rücksprung oder zwischen den Lagerringen und einem weiteren Bauteil der Lager verspannt sein.

In einem weiteren vorteilhaften Ausführungsbeispiel können ein oder beide und in bevorzugter Ausführungsweise der der Antriebseinheit zugewandte Nehmerzylinder einen mit dem Kupplungsgehäuse rotierenden Ringkolben aufweisen, wobei das Betätigungslager zwischen einer Nutringdichtung zur Abdichtung der Druckkammer des Nehmerzylinders gegenüber dem Nehmerzylindergehäuse und dem Ringkolben angeordnet ist. Hieraus resultiert ein Nehmerzylinder, dessen Ringkolben mit dem zugehörigen Übertragungselement rotiert, indem beispielsweise der Ringkolben an einem Lagerring des Betätigungslagers fest angeordnet oder aus diesem gebildet ist, während der andere Lagerring die Nutringdichtung aufnimmt. Der kolbenseitige Lagerring kann dabei ein Ringteil ausbilden oder enthalten, an dem mehrere über den Umfang verteilte Einzelkolben angeordnet sind, die fest mit dem Übertragungselement verbunden sind.

Die Abdichtung eines in dieser Weise ausgebildeten Nehmerzylinders zur Bildung des Ringraums kann in vorteilhafter Weise vorgesehen werden, indem das Ring- oder Scheibenteil gegenüber dem Außenring des Stützlagers und am Innenumfang des Nehmerzylindergehäuses abgedichtet ist. Das Scheibenteil weist dabei zum Durchlass der Einzelkolben eine der Anzahl der Einzelkolben entsprechende Anzahl von Öffnungen auf, die gegenüber den Einzelkolben abgedichtet sind.

Zur Erzielung eines axialen Bauraumgewinns können die Betätigungslager als Nadellager ausgebildet sein. Weitere Dichtmaßnahmen dieser Axiallager sind nicht nötig, da sie vollständig in dem Ringraum aufgenommen sind. Das Stützlager kann ein zweireihiges Wälzlager sein. Alternativ können Axialkugellager vorgesehen sein, wodurch der die Dichtung zum am Kolben angebrachten Radialwellendichtring ausbildende Lagerring radial gestützt ist und dadurch die Toleranzen des Radialwellendichtrings enger ausgelegt werden können.

Der erfinderische Gedanken umfasst sinngemäß auch eine einzelne Reibungskupplung mit verdrehbar und axial fest angeordnetem Betätigungssystem, wobei das zwischen dem Übertragungselement dem Kolben des Nehmerzylinders angeordnete Betätigungslager in gleicher Weise zu einer der Reibungskupplungen der Doppelkupplung und das Stützlager zur Aufnahme des Betätigungssystems in einem Ringraum ausgenommen sein kann, der beispielsweise durch elastische Membranen gebildet ist.

Die Erfindung wird anhand der Figuren 1 bis 7 näher erläutert.

Dabei zeigen:
- Figur 1: einen Teilschnitt durch ein Ausführungsbeispiel einer Doppelkupplung,
- Figur 2: ein gegenüber dem Betätigungssystem der Figur 1 verändertes Betätigungssystem mit in einem Ringraum gekapselten Betätigungslagem,
- Figur 3: eine Abwandlung des Betätigungssystems der Figur 2,
- Figur 4: ein Betätigungssystem mit einem mittels elastischer Membranen abgedichteten Ringraum,
- Figur 5 und 6: gegenüber dem Ausführungsbeispiel der Figur 4 geänderte Betätigungssysteme mit geänderten elastischen Membranen und
- Figur 7: ein Ausführungsbeispiel eines Betätigungssystems mit einem Nehmerzylinder mit rotierendem Ringkolben.

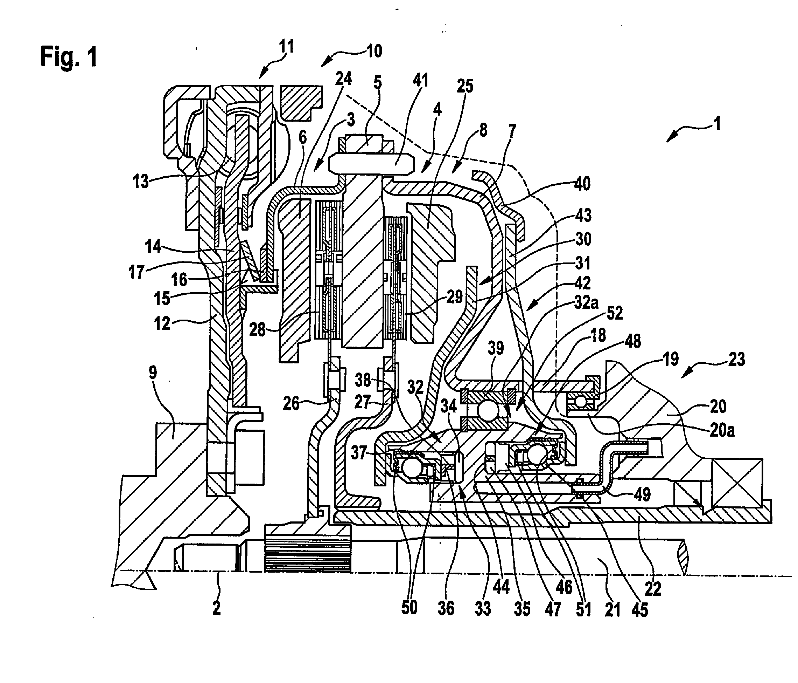

Figur 1 zeigt eine Doppelkupplung 1 im Teilschnitt oberhalb deren Rotationsachse 2. Die Doppelkupplung 1 enthält zwei Reibungskupplungen 3, 4, die eine gemeinsame zentrale Anpressplatte 5 aufweisen, die mit den Gehäuseteilen 6, 7 des Kupplungsgehäuses 8 fest verbunden ist. Das Kupplungsgehäuse 8 wird von der Kurbelwelle 9 einer nicht näher dargestellten Brennkraftmaschine angetrieben. Hierzu ist in dem gezeigten Ausführungsbeispiel ein Drehschwingungsdämpfer 10 - hier in Form eines Zweimassenschwungrads 11 - mit einem Eingangsteil 12 mit der Kurbelwelle 9 verbunden. Das entgegen der Wirkung der Energiespeicher 13 gegenüber dem Eingangsteil 12 begrenzt verdrehbare Ausgangsteil 14 weist ein axial vorspringendes Verzahnungsprofil 15 auf, in das ein komplementäres Verzahnungsprofil 16, beispielsweise wie gezeigt eine Innenverzahnung des Gehäuseteils 6, eingreift. Die Doppelkupplung 1 ist dabei gegenüber der Kurbelwelle 9 und gegen den Drehschwingungsdämpfer 10 mittels eines axial wirksamen Energiespeichers 17, beispielsweise einer Tellerfeder, in dem gezeigten Ausführungsbeispiel gegenüber dem Ausgangsteil 4 des Drehschwingungsdämpfers 10 verspannt. In weiteren Ausführungsbeispielen kann die Verspannung gegenüber der Antriebsseite genauso an anderen Bauteilen erfolgen wie die Verzahnung des Gehäuseteils 6.

Das Kupplungsgehäuse 8 stützt sich gegen die Wirkung des Energiespeichers 17 getriebeseitig mittels eines axialen Ansatzes 18 des Gehäuseteils 7 ab. Dieser ist verdrehbar und axial fest mittels eines an einem axialen Ansatz 20a des Getriebegehäuses 20 angeordneten Festlagers 19 aufgenommen. Hierdurch ist die Doppelkupplung 1 sowohl antriebsseitig als auch getriebeseitig aufgenommen beziehungsweise abgestützt. Achsversätze zwischen der Kurbelwelle 9 und den Getriebeeingangswellen 21, 22 des Getriebes 23, das ein Doppelkupplungsgetriebe sein kann, sowie von Verbrennungsprozessen herrührende Axial- und Taumelschwingungen der Doppelkupplung 1 werden durch die Elastizität der Verzahnung zwischen den Verzahnungsprofilen 15, 16 ausgeglichen.

Radial innerhalb des Kupplungsgehäuses 8 sind zur Bildung der Reibungskupplungen 3, 4 jeweils Druckplatten 24, 25 vorgesehen, die mittels nicht dargestellter Blattfedern die Druckplatten 24, 25 drehfest mit dem Kupplungsgehäuse 8, beispielsweise den Gehäuseteilen 6, 7 verbinden und die Druckplatten in Öffnungsposition der Reibungskupplungen 3, 4 halten. Zwischen der Anpressplatte 5 und den Druckplatten 24, 25 ist jeweils eine Kupplungsscheibe 26, 27 mit Reibbelägen 28, 29 zur Bildung eines Reibeingriffs der Reibungskupplungen 3, 4 vorgesehen. Die Kupplungsscheiben 26, 27 sind mit den Getriebeeingangswellen 21, 22 drehfest verbunden, beispielsweise verzahnt.

Die Druckplatte 25 der Reibungskupplung 4 wird von einem Übertragungselement 30 in Form eines hier dargestellten Kolbenblechs 31 zur Bildung eines wegabhängigen Reibeingriffs zwischen der Druckplatte 25 und der Anpressplatte 5 andererseits mit den Reibbelägen 29 der Kupplungsscheibe 27 axial beaufschlagt. Die Beaufschlagung erfolgt mittels der zu dem Betätigungssystem 52 für beide Reibungskupplungen gehörigen Betätigungseinrichtung 32 in Form eines von außen mit Druck beaufschlagten Nehmerzylinders 33 mit einem eine Druckkammer 34 bildenden Nehmerzylindergehäuse 35, in dem ein axial abhängig vom in der Druckkammer 34 anliegenden Druck verlagerbarer Ringkolben 36 aufgenommen ist. Zwischen Ringkolben 36 und Kolbenblech 31 ist ein Betätigungslager 37 aufgenommen, so dass eine Drehzahlentkoppelung zwischen dem feststehenden Ringkolben 36 und dem drehenden Kolbenblech 31 ermöglicht wird.

Das Kolbenblech 31 ist steif ausgebildet und überträgt einen vom Ringkolben 36 vorgegebenen Axialweg betrags- und richtungskonform auf die Druckplatte 25. Infolgedessen ergibt sich keine Übersetzung zwischen Druckplatte 25 und Ringkolben 36, so dass der Hub des Ringkolbens 36 im Wesentlichen und allenfalls unter Berücksichtigung des Verschleißes der Reibbeläge und der Fertigungstoleranzen auf den Hub der Druckplatte 25 vom vollständigen eingerückten bis zum vollständig ausgerückten Zustand der Reibungskupplung 4 begrenzt werden kann. Infolgedessen kann der axiale Bauraum des Nehmerzylinders 33 verkürzt werden. Bei geöffneter Reibungskupplung 3 stützt sich das Übertragungselement 31 mittels eines am Kolben 36 angebrachten Stegs 38 am Nehmerzylindergehäuse 35 ab.

Das Nehmerzylindergehäuse 35 ist mittels des Stützlagers 39 axial fest und verdrehbar am Kupplungsgehäuse 8 - wie hier gezeigt am Innenumfang des axialen Ansatzes 18 aufgenommen. Mittels einer nicht dargestellten Drehmomentstütze stützt sich das Nehmerzylindergehäuse 35 getriebeseitig ab und steht dadurch fest. Durch den geschlossenen Kraftkreislauf innerhalb der Doppelkupplung 1 während eines Betätigungsvorgangs der Reibungskupplung 25 ist die Doppelkupplung 1 unabhängig von äußeren Einflüssen und kann daher besonders präzise ausgerückt werden. Hierzu stützt sich das Nehmerzylindergehäuse 35 über das Stützlager 39 am Kupplungsgehäuse 8 ab, der Ringkolben 36 stützt sich am Nehmerzylindergehäuse 35 ab und beaufschlagt die Druckplatte 25, die gegen die am Kupplungsgehäuse 8 befestigte Anpressplatte 5 verspannt wird, so dass sich ein sehr kurzer Kraftkreislauf ergibt.

In ähnlicher Weise und unter Ausnutzung derselben Vorteile wird die Reibungskupplung 3 betätigt. Zur Verlagerung der Druckplatte 24 wird diese von über den Umfang verteilten Zugankern 40, die in Umfangsrichtung zwischen den Nieten 41 angeordnet sind, entsprechende, nicht dargestellte Gehäuseausschnitte der Gehäuseteile 6,7 durchgreifen und die Druckplatte 24 übergreifen, beaufschlagt. Die Zuganker 40 werden außerhalb des Kupplungsgehäuses 8 von dem ebenfalls steifen Übertragungselement 42 wie Kolbenblech 43, das durch Ausschnitte des axialen Ansatzes 18 greift, axial beaufschlagt. Das Kolbenblech 43 weist nicht näher dargestellte Ausschnitte auf, die Ausschnitte des axialen Ansatzes durchgreifen. Am Innenumfang des Kolbenblechs 43 greift das Betätigungslager 45 an, das vom Ringkolben 46, der in der Druckkammer 47 des Nehmerzylinders 48 axial verlagerbar geführt ist, beaufschlagt wird. Bei geöffneter Kupplung 4 stützt sich das Übertragungselement 42 axial mittels des an dem Kolben 46 angebrachten Stegs 44 an dem Nehmerzylindergehäuse 35 ab.

Die beiden Nehmerzylinder 33, 48 sind in einem einzigen ringförmigen Nehmerzylindergehäuse 35 angeordnet, wobei die Ringkolben 36, 46 an den sich gegenüberliegenden Seiten des Nehmerzylindergehäuses 35 axial angeordnet sind. Die Druckzuführung für die Druckkammern 34, 47 erfolgt mittels zwischen dem Getriebegehäuse 20 und dem Nehmerzylindergehäuse 35 geführte über den Umfang verteilte Druckleitungen, wobei im gezeigten Schnitt lediglich eine Druckleitung 49 sichtbar ist. Über die Druckleitungen werden die Druckkammern 34, 47 gesteuert und mit Druck beaufschlagt. Ein mittels eines Druckmittels auf die Druckkammern 34, 47 übertragener Druck kann mittels eines Geberzylinders oder mittels einer Pumpe bereitgestellt werden, wobei bei einer Verwendung einer Pumpe entsprechende Steuerventile den auf die Nehmerzylinder 33, 48 zu übertragenden Druck steuern.

Infolge der Betätigung der Druckplatten 24, 25 ohne Übersetzung sind die auf die Betätigungslager 37, 45 sowie auf das Stützlager 39 wirkenden Kräfte entsprechend hoch. Insbesondere die Betätigungslager werden daher auf hohe Kräfte und hohe Betriebstemperaturen infolge innerer Reibung der Lager ausgelegt. Insbesondere sind die Betätigungslager mit Spezialfett befüllt und mittels der Dichtscheiben 50, 51 gegen ein Austreten des Fetts geschützt.

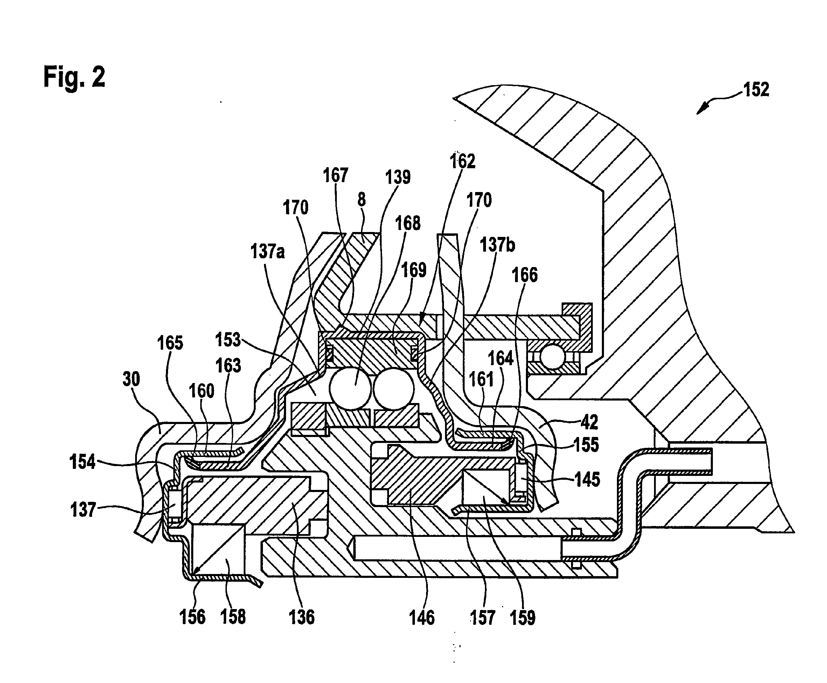

Figur 2 zeigt ein gegenüber dem Betätigungssystem 52 der Figur 1 verändertes Betätigungssystem 152 mit einem Ringraum 153 im Schnitt. Der Ringraum 153 nimmt die Betätigungslager 137, 145 sowie das Stützlager 139 auf. Zur Bildung und Abdichtung des Ringraums 153 nach außen ist an den Ringkolben 136, 146 jeweils ein Radialwellendichtring 158, 159 angeordnet, der gegenüber den Lagerringen 154, 155 abdichtet. Hierzu werden die Lagerringe 154, 155 an ihren Innenumfang abgewinkelt und bilden jeweils einen axialen Ansatz 156, 157 aus. Die Lagerringe 154, 155 sind axial fest gegenüber den Ringkolben 136, 146 angeordnet, so dass die Radialwellenringe 158, 159 lediglich eine Relativverdrehung der Ringkolben 136, 146 gegenüber den Lagerringen 145, 155 ausgeglichen werden müssen.

Die transversale Bewegung des feststehenden Kupplungsgehäuses 8 gegenüber den Übertragungselementen 30, 42, an denen die Lagerringe 154, 155 fest angeordnet sind, erfolgt jeweils zwischen den Lagerringen 154, 155 und mittels am Außenring 162 des am Kupplungsgehäuse 8 axial fest aufgenommenen Stützlagers 139 ausgebildeten Seitenteilen 137a, 137b. Hierzu weisen die Seitenteile 137a, 137b an deren Außenumfang jeweils einen weiteren axialen Ansatz 160, 161 auf, die entsprechend an den Seitenteilen 137a, 137b koaxial zu diesen angebrachte Ansätze 163, 164 axial übergreifen. Die Ansätze 160, 163 beziehungsweise 161, 164 sind dabei mittels einer Dichtlippe 165, 166 gegeneinander abgedichtet, wobei in dem gezeigten Ausführungsbeispiel die Dichtlippen 165, 166, die an die Ansätze 163, 164 angespritzt sein können, an den dem Außenring 162 zugeordneten Ansätzen angebracht sind und an Dichtflächen der den Lagerringen 145, 155 zugeordneten Ansätzen 160, 161 abdichten. Infolge derselben Drehzahl der Ansätze 160, 161, 163, 164 ist lediglich eine nicht rotative, transversale Abdichtung zwischen den Ansätzen160,163 beziehungsweise 161, 164 vorzusehen.

Der Außenring 139 kann direkt die Außenlaufbahnen für die Wälzkörper bilden. In dem gezeigten Ausführungsbeispiel ist allerdings ein die Laufbahnen bildender Lagerring 169 für die zweireihig angeordneten Wälzkörper 168 zwischen dem Außenring 139 und den Wälzkörpern 168 angeordnet, so dass aus dem Außenring 139 radial außen eine Nase 167 ausgestellt werden kann, mittels der das Stützlager axial fixiert werden kann. Lagerring 169 und Außenring 139 sind gegeneinander mittels der Dichtringe 170 abgedichtet.

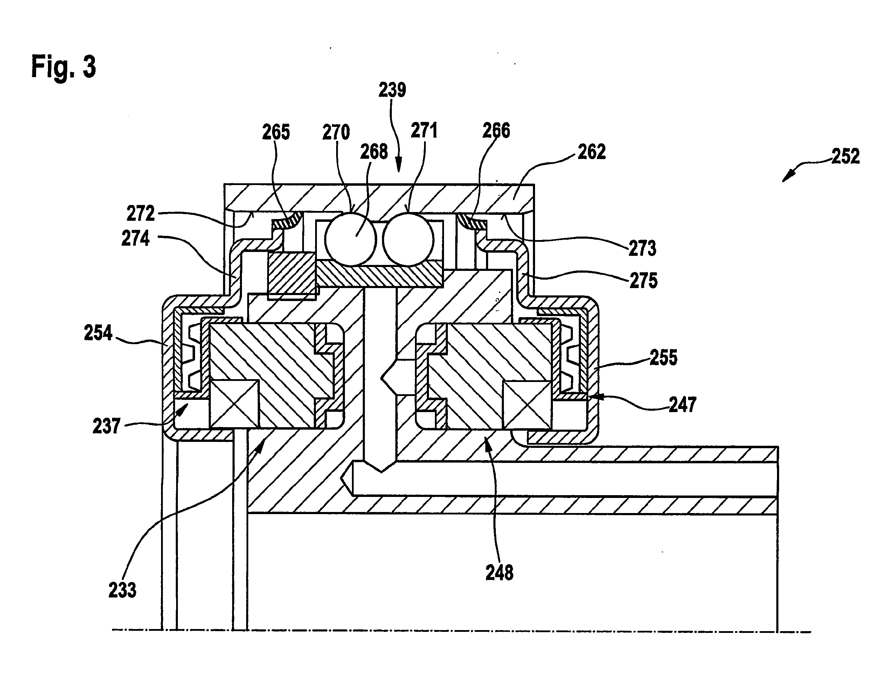

Figur 3 zeigt im Unterschied zum Betätigungssystem 152 der Figur 2 ein geändertes Betätigungssystem 252, bei dem der Außenring 262 des Stützlagers 239 im Wesentlichen hohlzylindrisch ausgebildet ist und die Laufbahnen 270, 271 für die zweireihig angeordneten Wälzkörper 268 bereits enthält. Weiterhin sind am Innenumfang Dichtflächen 272, 273, die gleichzeitig mit der Herstellung und Bearbeitung der Laufbahnen 270, 271 dargestellt werden können, vorgesehen, an denen an den radial erweiterten Seitenteilen 274, 275 der Lagerringe 254, 255 der Betätigungslager 237, 247 befestigte Dichtlippen 265, 266 axial abhängig von den Betätigungsbewegungen der Nehmerzylinder verlagerbar abdichten. Die Dichtlippen 265, 266 können angespritzt sein oder durch Ringdichtungen wie O-Ringe, Quad-Ringe oder Dichtungen mit V-förmigem Querschnitt ersetzt werden.

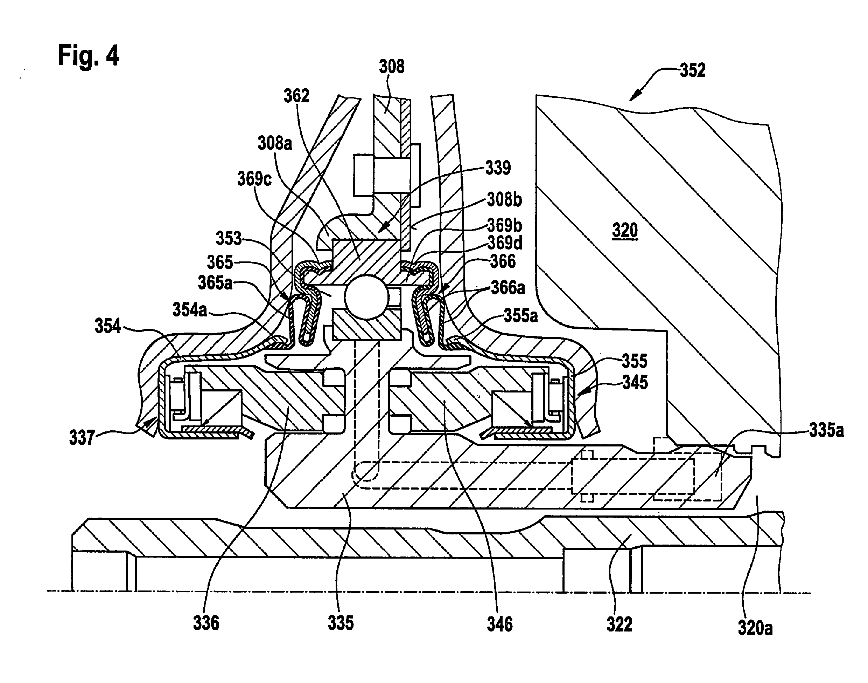

Figur 4 zeigt ein Betätigungssystem 352 mit einer gegenüber der Figur 1 veränderten Aufnahme des Stützlagers 337 am Kupplungsgehäuse 308. Das Stützlager 339 wird von der Getriebeseite her gegen einen Anschlag 308a des Kupplungsgehäuses 308 eingebracht und mittels eines mit diesem vernieteten Scheibenteils 308b gesichert. Die Aufnahme der Doppelkupplung am Getriebegehäuse 320 erfolgt mittels eines axialen Ansatzes 335a des Nehmerzylindergehäuses 335 an einem Ringspalt 320a zwischen der als Hohlwelle ausgestalteten äußeren Getriebeeingangswelle 322 und dem Getriebegehäuse 320.

Die Abdichtung des Ringraums 353 zwischen dem Außenring 362 des Stützlagers 339 und den Lagerringen 354, 355 der Betätigungslager 337, 345 erfolgt in diesem Ausführungsbeispiel mittels jeweils eines zwischen den Lagerringen 354 beziehungsweise 355 und dem Außenring 362 angeordneten Faltenbalgs 365, 366. Die Faltenbälge 365, 366 können - wie im Ausführungsbeispiel gezeigt - an axialen Ansätzen 369a, 369b des Außenrings 362 vorzugsweise verspannt aufgenommen sein, wobei die Ansätze 369a, 369b über entsprechende radiale Rücksprünge 369c, 369d verfügen können. Die anderen Enden der Faltenbälge 365, 366 sind jeweils an einem Ansatz der mit dem Hub der Ringkolben 336, 346 axial verlagerten Lagerringe 354, 355 aufgenommen. In besonders vorteilhafter Weise wird dabei zwischen den Lagerringen 354, 362 beziehungsweise 355, 362 jeweils ein Zwischenteil 354a, 355a vorgesehen, das eine Führung für die Federbälge 365, 366 insbesondere zur Stabilisierung unter Fliehkrafteinwirkung vorsieht. Der Hub zwischen den Lagerringen 354, 355 und dem feststehenden Außenring 362 wird durch die Falten 365a, 366a ausgeglichen. Die Enden der Faltenbälge 365, 366 können an den entsprechenden Aufnahmen mit Schellen oder Spannringen gesichert sein, um insbesondere unter Fliehkrafteinwirkung eine stabile Verbindung zu erhalten. Alternativ können die Faltenbälge zumindest an einer Seite an die metallische Aufnahme oder an die Zwischenteile 354a, 355a anvulkanisiert werden.

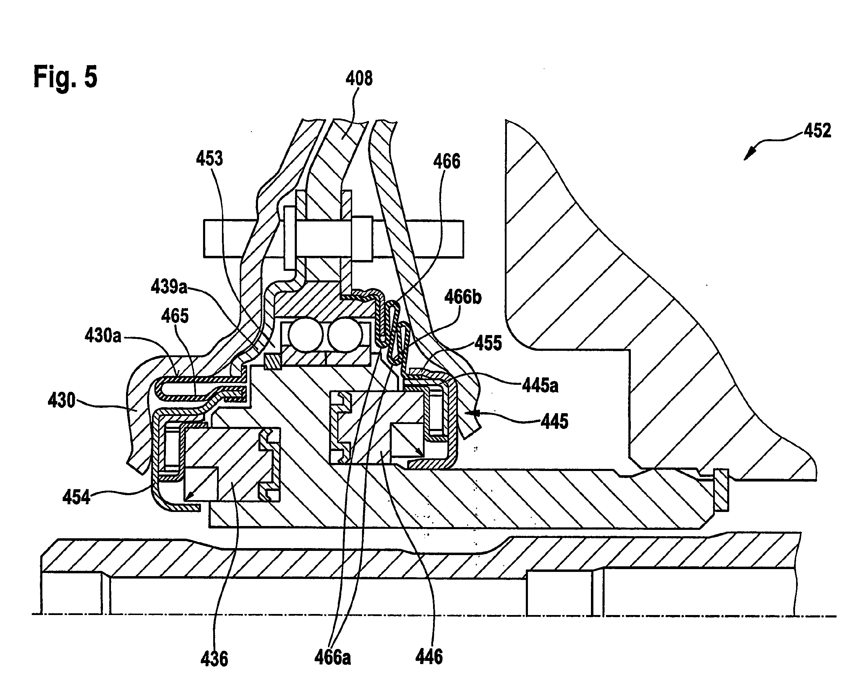

Figur 5 zeigt ein dem Betätigungssystem 352 der Figur 4 ähnliches Betätigungssystem 452 mit einem Faltenbalg 466 mit zwei Falten 466a, die während des Hubs des Ringkolbens 446 eine geringere radiale Änderung zeigen. Die Verbindung des Faltenbalgs 466 mit dem Außenring 455 erfolgt mittels einer Verpressung des Endes des Faltenbalgs zwischen dem Außenring 455 und einem zum Betätigungslager 445 gehörigen radial innerhalb des Lagerrings 455 angeordneten Bauteil 445a.

Zumindest in einer Falte 466a kann zur Stabilisierung dieser ein Ring 466b vorgesehen sein. Alternativ kann die Wandstärke des Faltenbalgs 466 vorgesehen werden.

Die translatorische Abdichtung des Ringräums 453 auf der der Antriebseinheit zugewandten Seite des Betätigungssystems 452 erfolgt mittels einer Rollmembran 465 oder Rollbalgs. Diese stützt sich an einem Innenumfang 430a des Übertragungselements 430 gegen Fliehkraft ab. Bei einer Verlagerung des Ringkolbens 436 rollt die elastische Rollmembran 465 am Innenumfang ab. Die Rollmembran 465 ist an einem Ende am Seitenteil 439a, das am Kupplungsgehäuse 408 aufgenommen und gegen den Lagerring 454 abgedichtet dicht angeordnet, beispielsweise anvulkanisiert. Das andere Ende übergreift das stirnseitige Ende des Lagerrings 454.

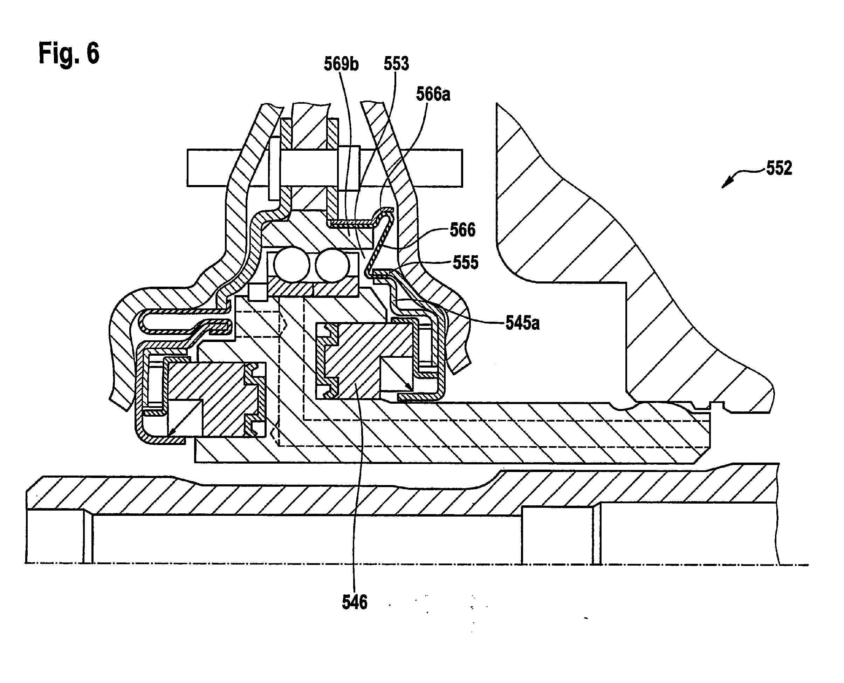

Figur 6 zeigt ein gegenüber der Figur 5 geändertes Betätigungssystem 552 mit einer veränderten Abdichtung des Ringraums 553. Anstatt des dort verwendeten Faltenbalgs 466 wird ein Pendelbalg 566 verwendet. Der Pendelbalg 566 ist an seinem äußeren Durchmesser mit dem Ansatz 569b mittels eines Metallbands 566a verspannt. Während einer Verlagerung des Ringkolbens 546 wird der äußere Umfang des Pendelbalgs 566 gegenüber dem Innenumfang verlagert. Dabei pendelt der Pendelbalg 566 um seine radial äußere Einspannung. In vorteilhafter Weise wird der Pendelbalg 566 so positioniert, dass dieser bei halbem Hub des Ringkolbens 546 die zwischen den endseitigen Einspannungen befindliche Wandung des Pendelbalgs 566 senkrecht steht. Auf diese Weise kann eine Verlagerung des Ringkolbens 546 ohne elastische Dehnung des Pendelbalgs 566 erfolgen. Der Innenumfang des Pendelbalgs 566 ist zwischen dem Lagerring 555 und dem radial innerhalb angeordneten Bauteil 545a verspannt, wobei dessen Ende aufgedickt sein kann. Alternativ zum Pendelbalg 566 kann eine flache Membran vorgesehen sein, die den axialen Ausgleich des Hubs des Ringkolbens 546 aufgrund einer eingestellten elastischen Dehnbarkeit ausgleicht.

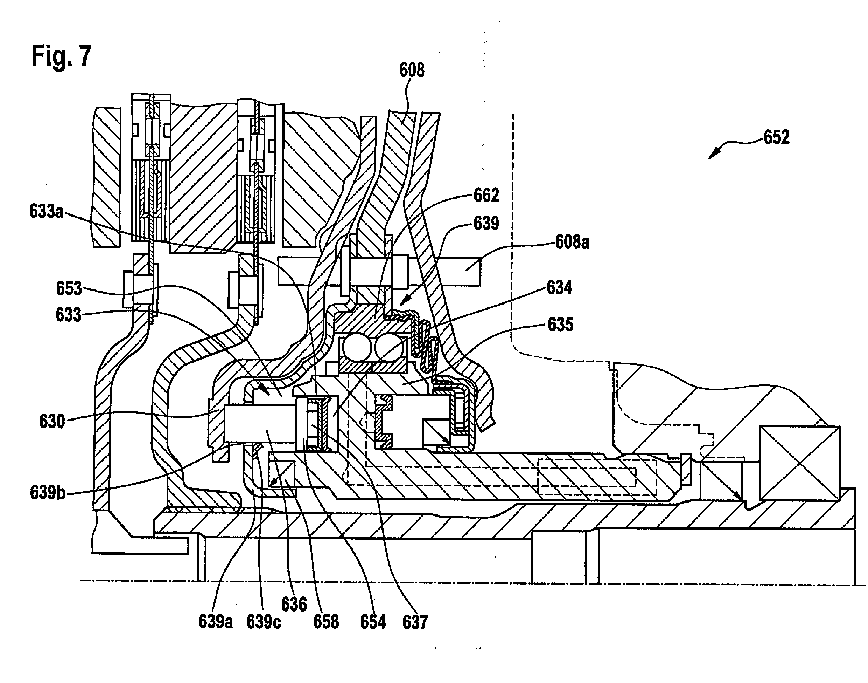

Figur 7 zeigt ein Betätigungssystem 652, das einen bezüglich des Nehmerzylinders 33 der Figur 1 veränderten Nehmerzylinder 633 aufweist. In dem Nehmerzylinder 633 ist das Betätigungslager 637 in der Ringöffnung 633a des Nehmerzylinders 633 aufgenommen, wobei ein Lagerring die Nutringdichtung zur Abdichtung der Druckkammer 634 aufnimmt. Der andere Lagerring 654 nimmt ein Ringteil auf oder bildet dieses Ringteil, an dem über den Umfang verteilt Einzelkolben 636 angeordnet sind, die fest mit dem Übertragungselement 630 verbunden sind, wobei der Lagerring 654 den drehenden Teil des Betätigungslagers 637 bildet.

Die Abdichtung des Ringraums 653 erfolgt mittels des Blechteils 639a, das am Außenumfang mit dem Kupplungsgehäuse 608 vernietet ist und radial innerhalb gegenüber dem Außenring 662 des Stützlagers 639 abgedichtet ist. Am Innenumfang ist das Blechteil 639a abgewinkelt und bildet einen Dichtkontakt zum an dem Nehmerzylindergehäuse 635 angeordneten Radialwellendichtring 658. Zwischen Innen- und Außenumfang des Blechteils 639a sind in diesem Öffnungen 639b vorgesehen, durch die die Einzelkolben 636 geführt sind. Jede der Öffnungen 639b ist mittels einer Dichtung 639c versehen, die den Einzelkolben 636 abdichten.

Vorteilhaft ist die Verwendung einfacher Dichtungen 639c. Das Seitenteil 639a dreht mit dem Kupplungsgehäuse 608 und dichtet den Ringraum 653 gegenüber dem Nehmerzylindergehäuse ab, so dass die Nutringdichtung des Nehmerzylinders 633 komplett in dem Ringraum 653 aufgenommen ist. Durch die Aufnahme des Seitenteils 639a und des am Stützlager 639 zentrierten Kupplungsgehäuses 635 an derselben Vernietung 608a resultiert eine geringe Abweichung der Koaxialität der beiden Teile zueinander, wodurch der Radialwellendichtring 658 in vorteilhafter Weise geschont wird.

### Bezugszeichenliste

- 1: Doppelkupplung
- 2: Rotationsachse
- 3: Reibungskupplung
- 4: Reibungskupplung
- 5: Anpressplatte
- 6: Gehäuseteil
- 7: Gehäuseteil
- 8: Kupplungsgehäuse
- 9: Kurbelwelle
- 10: Drehschwingungsdämpfer
- 11: Zweimassenschwungrad
- 12: Eingangsteil
- 13: Energiespeicher
- 14: Ausgangsteil
- 15: Verzahnungsprofil
- 16: Verzahnungsprofil
- 17: Energiespeicher
- 18: axialer Ansatz
- 19: Festlager
- 20: Getriebegehäuse
- 20a: Ansatz
- 21: Getriebeeingangswelle
- 22: Getriebeeingangswelle
- 23: Getriebe
- 24: Druckplatte
- 25: Druckplatte
- 26: Kupplungsscheibe
- 27: Kupplungsscheibe
- 28: Reibbelag
- 29: Reibbelag
- 30: Übertragungselement
- 31: Kolbenblech
- 32: Betätigungseinrichtung
- 32a: Betätigungseinrichtung
- 33: Nehmerzylinder
- 34: Druckkammer
- 35: Nehmerzylindergehäuse
- 36: Ringkolben
- 37: Betätigungslager
- 38: Steg
- 39: Stützlager
- 40: Zuganker
- 41: Niet
- 42: Übertragungselement
- 43: Kolbenblech
- 44: Steg
- 45: Betätigungslager
- 46: Ringkolben
- 47: Druckkammer
- 48: Nehmerzylinder
- 49: Druckleitung
- 50: Dichtscheibe
- 51: Dichtscheibe
- 52: Betätigungssystem
- 136: Ringkolben
- 137: Betätigungslager
- 137a: Seitenteil
- 137b: Seitenteil
- 139: Stützlager
- 145: Betätigungslager
- 146: Ringkolben
- 152: Betätigungssystem
- 153: Ringraum
- 154: Lagerring
- 155: Lagerring
- 156: Ansatz
- 157: Ansatz
- 158: Radialwellendichtring
- 159: Radialwellendichtring
- 160: Ansatz
- 161: Ansatz
- 162: Außenring
- 163: Ansatz
- 164: Ansatz
- 165: Dichtlippe
- 166: Dichtlippe
- 167: Nase
- 168: Wälzkörper
- 169: Lagerring
- 170: Dichtung
- 233: Nehmerzylinder
- 237: Betätigungslager
- 247: Betätigungslager
- 248: Nehmerzylinder
- 252: Betätigungssystem
- 254: Lagerring
- 255: Lagerring
- 262: Außenring
- 268: Wälzkörper
- 270: Laufbahn
- 271: Laufbahn
- 272: Dichtfläche
- 273: Dichtfläche
- 274: Seitenteil
- 275: Seitenteil
- 308: Kupplungsgehäuse
- 308a: Anschlag
- 308b: Scheibenteil
- 320: Getriebegehäuse
- 320a: Ringspalt
- 335: Nehmerzylindergehäuse
- 337: Betätigungslager
- 335a.: Ansatz
- 339: Stützlagers
- 345: Betätigungslager
- 352: Betätigungssystem
- 353: Ringraum
- 354: Lagerring
- 354a: Zwischenteil
- 355: Lagerring
- 355a: Zwischenteil
- 362: Außenring
- 365: Faltenbalg
- 365a: Falte
- 366: Faltenbalg
- 366a: Falte
- 369a: Ansatz
- 369b: Ansatz
- 369c: Rücksprung
- 369d: Rücksprung
- 408: Kupplungsgehäuse
- 430: Übertragungselement
- 430a: Innenumfang
- 436: Ringkolben
- 439a: Seitenteil
- 445: Betätigungslager
- 445a: Bauteil
- 446: Ringkolben
- 452: Betätigungssystem
- 453: Ringraum
- 454: Lagerring
- 455: Lagening
- 465: Rollmembran
- 466: Faltenbalg
- 466a: Falte
- 466b: Falte
- 545a: Bauteil
- 546: Ringkolben
- 552: Betätigungssystem
- 553: Ringraum
- 555: Lagerring
- 566: Pendelbalg
- 566a: Metallband
- 569b: Ansatz
- 608: Kupplungsgehäuse
- 608a: Vernietung
- 630: Übertragungselement
- 633: Nehmerzylinder
- 633a: Ringöffnung
- 634: Druckkammer
- 635: Nehmerzylindergehäuse
- 636: Einzelkolben
- 637: Betätigungslager
- 639: Stützlager
- 639a: Blechteil
- 639b: Öffnung
- 639c: Dichtung
- 652: Betätigungssystem
- 653: Ringraum
- 654: Lagerring
- 658: Radialwellendichtring
- 662: Außenring

## Patentansprüche

1. Doppelkupplung (1) mit zwei von einer Antriebseinheit angetriebenen Reibungskupplungen (3, 4) mit einem gemeinsamen Kupplungsgehäuse (8, 308, 408, 608) und einer mit diesem fest verbundenen Anpressplatte (5) mit zwei Anpressflächen sowie zwei jeweils einer Anpressfläche zugewandten, axial verlagerbaren Druckplatten (24, 25), wobei zwischen jeweils einer Druckplatte (24, 25) und der Anpressplatte (5) Reibbeläge (28, 29) mit jeweils einer Getriebeeingangswelle (21, 22) eines Getriebes (23) drehfest verbundenen Kupplungsscheibe (26, 27) zur Bildung eines Reibeingriffs durch axiale Beaufschlagung der Druckplatten (24, 25) mittels eines axial fest und verdrehbar mittels eines Stützlagers (39, 139, 239, 339, 639) am Kupplungsgehäuse (8) aufgenommenen Betätigungssystems (52, 152, 252, 352, 452, 552, 652) mit jeweils einer Betätigungseinrichtung (32, 32a) verspannbar sind, die Druckplatten (24, 25) mittels von den Betätigungseinrichtungen (32, 32a) beaufschlagten Übertragungselementen (30, 42, 430) betätigt werden und die Druckplatten (24, 25) um denselben an den Betätigungseinrichtungen (32, 32a) eingestellten Betätigungsweg verlagert werden, **dadurch gekennzeichnet, dass** zwischen dem Kupplungsgehäuse (8, 308, 408, 608) und einem Außenumfang der Betätigungseinrichtungen (32, 32a) ein dichter Ringraum (153, 353, 453, 553, 653) gebildet ist.

2. Doppelkupplung (1) nach Anspruch 1, **dadurch gekennzeichnet, dass** beide Betätigungseinrichtungen (32, 32a) mittels einer gemeinsamen Aufnahme um die beiden Getriebeeingangswellen (21, 22) angeordnet sind.

3. Doppelkupplung (1) nach Anspruch 2, **dadurch gekennzeichnet, dass** die Aufnahme verdrehbar am Kupplungsgehäuse (8, 308, 408, 608) aufgenommen und an einem Getriebegehäuse (20, 320) des Getriebes (23) drehfest abgestützt ist.

4. Doppelkupplung (1) nach einem der Ansprüche 1 bis 3, **dadurch gekennzeichnet, dass** das Kupplungsgehäuse (8, 308, 408, 608) verdrehbar an einem Getriebegehäuse (20, 320) abgestützt ist.

5. Doppelkupplung (1) nach einem der Ansprüche 1 bis 4, **dadurch gekennzeichnet, dass** das Kupplungsgehäuse (8, 308, 408, 608) dem Getriebe (23) zugewandt einen axialen Ansatz (18, 83) aufweist, an dem die Aufnahme aufgenommen und mittels dessen die Doppelkupplung (1) am Getriebegehäuse (2, 320) verdrehbar abgestützt ist.

6. Doppelkupplung (1) nach Anspruch 4 oder 5, **dadurch gekennzeichnet, dass** das Kupplungsgehäuse (8, 308, 408, 608) an einem aus dem Getriebegehäuse (20, 320) axial auskragenden Ansatz (20a) mittels eines Festlagers (19) axial fest und gegenüber dem Getriebegehäuse (20, 320) verdrehbar aufgenommen ist.

7. Doppelkupplung (1) nach einem der Ansprüche 1 bis 6, **dadurch gekennzeichnet, dass** zumindest eine der Reibungskupplungen (3, 4) eine zwangsweise geschlossene Reibungskupplung ist.

8. Doppelkupplungen (1) nach einem der Ansprüche 1 bis 6, **dadurch gekennzeichnet, dass** beide Reibungskupplungen (3, 4) zwangsweise geschlossene Reibungskupplungen sind, wobei die Betätigungswege zum Schließen dieser entgegengesetzt gerichtet sind.

9. Doppelkupplung (1) nach einem der Ansprüche 1 bis 8, **dadurch gekennzeichnet, dass** die Betätigungseinrichtungen (32, 32a) hydrostatisch betrieben werden.

10. Doppelkupplung (1) nach Anspruch 9, **dadurch gekennzeichnet, dass** die gemeinsame Aufnahme der Betätigungseinrichtungen (32, 32a) ein Nehmerzylindergehäuse (35, 335, 635) ist, in dem zur Beaufschlagung jeweils eines Übertragungselements (30, 42, 430) jeweils ein außen druckbeaufschlagter Nehmerzylinder (33, 48, 233, 248, 633) untergebracht ist.

11. Doppelkupplung (1) nach Anspruch 10, **dadurch gekennzeichnet, dass** die Nehmerzylinder (33, 48, 233, 248) jeweils einen Ringkolben (36, 46, 136, 136, 436, 446, 546) aufweisen, der axial in einer von außen druckbeaufschlagbaren Druckkammer (34,47) verlagerbar ist und unter Zwischenschaltung jeweils eines Betätigungslagers (37, 45, 137, 147, 237, 247, 337, 345, 445) die Übertragungselemente (30, 42, 430) betätigt.

12. Doppelkupplung (1) nach einem der Ansprüche 1 bis 11, **dadurch gekennzeichnet, dass** der Ringraum (153, 353, 453, 553, 653) zumindest teilweise mit einem Fluid befüllt ist.

13. Doppelkupplung (1) nach Anspruch 12 **dadurch gekennzeichnet, dass** das Fluid schmierende und/oder kühlende Eigenschaften aufweist.

14. Doppelkupplung (1) nach einem der Ansprüche 1 bis 13, **dadurch gekennzeichnet, dass** Wälzflächen der Betätigungstager (137, 147, 237, 247, 337, 345, 445) und des Stützlagers (139, 239, 339, 639) innerhalb des Ringraums (153, 353, 453, 553, 653) angeordnet sind.

15. Doppelkupplung (1) nach einem der Ansprüche 10 bis 14, **dadurch gekennzeichnet, dass** der Ringraum (153, 353, 453, 553) zwischen dem Kupplungsgehäuse (8, 308,408) und den Innenumfängen der Ringkolben (136, 136, 436, 446, 546) mittels jeweils eines Radialwellendichtrings (158, 59) abgedichtet ist.

16. Doppelkupplung (1) nach Anspruch 15, **dadurch gekennzeichnet, dass** der Ringraum (153, 353, 453, 553, 653) bezüglich des Kupplungsgehäuses (8, 308, 408) an einem Außenring (162, 262, 362, 662) des Stützlagers (139, 239, 339, 639) abgedichtet wird,

17. Doppelkupplung. (1) nach einem der Ansprüche 15 oder 16, **dadurch gekennzeichnet, dass** Lagerringe (154, 155, 254, 255, 354, 355, 454, 455, 555) der Betätigungslager (137, 147, 237, 247, 337, 345,445) gegenüber den Ringkolben (136, 136, 436, 446, 546) mittels eines Radialwellendichtrings (158, 159) abgedichtet sind.

18. Doppelkupplung (1) nach Anspruch 17, **dadurch gekennzeichnet, dass** Lagerringe (154, 155, 254, 255, 354, 355, 454, 455, 555) der Betätigungslager (137, 147, 237, 247, 337, 345, 445) gegenüber einem Außenring (162, 262, 362, 662) des Stützlagers (139, 239, 339, 639) mittels einer translatorischen Abdichtung abgedichtet sind.

19. Doppelkupplung (1) nach Anspruch 18, **dadurch gekennzeichnet, dass** an den Lagerringen (154, 155) der Betätigungsläger (137, 147 jeweils ein axialer, zu einem Ringflansch des Außenrings (162) des Stützlagers (139) koaxial ausgeformter Ringflansch gebildet ist und zwischen den Ringflanschen jeweils eines Lagerrings (154, 155) eines Betätigungslagers (137, 147) und jeweils einem der Ringflansche des Außenrings (162) des Stützlagers (139) eine translatorische Abdichtung wirksam ist.

20. Doppelkupplung (1) nach Anspruch 19, **dadurch gekennzeichnet, dass** die Ringflansche radial innerhalb der Wälzkörper (168) des Stützlagers (139) angeordnet sind.

21. Doppelkupplung (1) nach einem der Ansprüche 18 bis 20, **dadurch gekennzeichnet, dass** die translatorische Dichtung aus einer Dichtlippe (165, 166) gebildet ist, die an einem Ringflansch fest angeordnet ist und gegenüber einer Dichtfläche am korrespondierenden Ringflansch dichtet.

22. Doppelkupplung (1) nach Anspruch 17, **dadurch gekennzeichnet, dass** die Lagerringe (254, 255) der Betätigungslager (237, 247) radial außerhalb der Wälzkörper (268) des Stützlagers (239) die translatorische Abdichtung zum Außenring (262) des Stützlagers (239) bilden.

23. Doppelkupplung (1) nach Anspruch 22, **dadurch gekennzeichnet, dass** am Außenumfang der Lagerringe (254, 255) eine Dichtlippe (265, 266) angeordnet ist, die an einem Innenumfang des Außenrings (262) abdichtet.

24. Doppelkupplung (1) nach Anspruch 17 oder 18, **dadurch gekennzeichnet, dass** zwischen dem Kupplungsgehäuse (308, 408, 608) oder dem Außenring (362, 662) des Stützlagers (339, 639) und den Lagerringen (354, 355, 455, 555) der Betätigungslager 337, 345, 445) jeweils eine elastische Membran angeordnet ist.

25. Doppelkupplung (1) nach Anspruch 24, **dadurch gekennzeichnet, dass** die elastische Membran ein Faltenbalg (365, 366, 465, 466), eine Rollmembran (465) oder ein Pendelbalg (566) ist.

26. Doppelkupplung (1) nach Anspruch 24 oder 25, **dadurch gekennzeichnet, dass** jeweils eine elastische Membran an einem Außenumfang des Stützlagers (339, 639) und an einem Innenumfang des Außenrings (354, 355) des jeweiligen Betätigungslagers (337) aufgenommen ist.

27. Doppelkupplung (1) nach einem der Ansprüche 24 bis 26, **dadurch gekennzeichnet, dass** die elastische Membran zumindest einen einen Lagerring umgreifenden Rücksprung (369c, 369d) aufweist.

28. Doppelkupplung (1) nach einem der Ansprüche 24 bis 27, **dadurch gekennzeichnet, dass** die elastische Membran zwischen zumindest einem Lagerring (455) und einem weiteren Bauteil (445a) des Betätigungs- oder Stützlagers verspannt ist.

29. Doppelkupplung (1) nach einem der Ansprüche 10 bis 28, **dadurch gekennzeichnet, dass** zumindest einer der Nehmerzylinder (633) einen mit dem Kupplungsgehäuse (608) rotierenden Ringkolben aufweist, wobei das Betätigungslager (637) zwischen einer Lippendichtung zur Druckkammer (634) des Nehmerzylinders (633) und dem Ringkolben angeordnet ist.

30. Doppelkupplung (1) nach Anspruch 29, **dadurch gekennzeichnet, dass** der Ringkolben aus einem Lagerring (654) des Betätigungslagers (637) gebildet ist und mehrere Ober den Umfang verteilte Einzelkolben (636) aufweist, die fest mit dem Übertragungselement verbunden sind.

31. Doppelkupplung (1) nach einem der Ansprüche 29 oder 30, **dadurch gekennzeichnet, dass** der Nehmerzylinder (633) zur Bildung des Ringraums (653) ein am Kupplungsgehäuse (608) befestigtes und gegenüber dem Außenring (662) des Stützlagers (639) und am Innenumfang des Nehmerzylindergehäuses (635) abgedichtetes Blechteil (639a) aufweist, das zum Durchlass der Einzelkolben (636) eine der Anzahl der Einzelkolben entsprechende Anzahl von Öffnungen (639b) aufweist, die gegenüber den Einzelkolben (636) abgedichtet sind.

32. Doppelkupplung (1) nach einem der Ansprüche 11 bis 31, **dadurch gekennzeichnet, dass** die Betätigungslager (137,147, 237, 247, 337, 345, 445) als Nadellager oder Axialkugellager ausgebildet sind.

33. Doppelkupplung (1) nach einem der Ansprüche 1 bis 32, **dadurch gekennzeichnet, dass** das Stützlager (139, 239, 339, 639) ein zweireihiges Wälzlager ist.

34. Reibungskupplunge (1) mit einem von einem Antrieb angetriebenen Kupplungsgehäuse (8, 308, 408, 608) und einer mit diesem fest verbundenen Anpressplatte (5) mit einer Anpressflächen sowie einer der Anpressfläche zugewandten, axial verlagerbaren Druckplatt (24, 25) wobei zwischen der Druckplatte (24, 26) und der Anpressplatte (5) Reibbeläge (28, 29) einer mit einer Getriebeeingangswel-le (21, 22) leines Getriebes (23) drehfest verbundenen Kupplungsscheibe (26, 27) zur Bildung eines Reibeingriffs durch axiale Beaufschlagung der Druckplatte (24, 25) mittels eines axial fest und verdrehbar mittels eines Stützlagers (39, 139, 239, 339, 639) am Kupplungsgehäuse (8, 308, 408, 608) aufgenommenen Betätigungssystems (52, 152, 252, 352, 452, 552, 652) mit einer Betätigungseinrichtung (32, 32a) verspannbar ist, die Druckplatte (24, 25) mittels eines von der Betätigungseinrichtung (32, 32a) beaufschlagten Übertragungselements (30, 42, 42a) betätigt wird und die Druckplatten (24, 25) um denselben an der Betätigungseinrichtung (32, 32a) eingestëliten Betätigungsweg verlagert wird, **dadurch gekennzeichnet, dass** zwischen dem Kupplungsgehäuse (8, 308, 408, 608) und einem Außenumfang der Betätigungseinrichtung (32, 32a) ein dichter Ringraum (153, 353, 453, 553, 653) gebildet ist.

## Claims

1. Dual clutch (1) having two friction clutches (3, 4) which are driven by a drive unit, with a common clutch housing (8, 308, 408, 608) and a pressing plate (5) which is connected fixedly thereto with two pressing faces and two axially displaceable pressure plates (24, 25) which in each case face a pressing face, it being possible for friction linings (28, 29) of a clutch plate (26, 27) which is connected fixedly to in each case one transmission input shaft (21, 22) of a transmission (23) so as to rotate with it to be clamped between in each case one pressure plate (24, 25) and the pressing plate (5) in order to produce a frictional engagement by axial loading of the pressure plates (24, 25) by means of an actuating system (52, 152, 252, 352, 452, 552, 652) which is received on the clutch housing (8) by means of a supporting bearing (39, 139, 239, 339, 639), such that it is fixed axially and can be rotated, and has in each case one actuating device (32, 32a), the pressure plates (24, 25) being actuated by means of transmission elements (30, 42, 430) which are loaded by the actuating devices (32, 32a), and the pressure plates (24, 25) being displaced by the same actuating travel which is set at the actuating devices (32, 32a), **characterized in that** a sealed annular space (153, 353, 453, 553, 653) is formed between the clutch housing (8, 308, 408, 608) and an outer circumference of the actuating devices (32, 32a).

2. Dual clutch (1) according to Claim 1, **characterized in that** both actuating devices (32, 32a) are arranged around the two transmission input shafts (21, 22) by means of a common receptacle.

3. Dual clutch (1) according to Claim 2, **characterized in that** the receptacle is received rotatably on the clutch housing (8, 308, 408, 608) and is supported fixedly on a transmission housing (20, 320) of the transmission (23) so as to rotate with it.

4. Dual clutch (1) according to one of Claims 1 to 3, **characterized in that** the clutch housing (8, 308, 408, 608) is supported rotatably on a transmission housing (20, 320).

5. Dual clutch (1) according to one of Claims 1 to 4, **characterized in that**, facing the transmission (23), the clutch housing (8, 308, 408, 608) has an axial projection (18, 83), on which the receptacle is received and by means of which the dual clutch (1) is supported rotatably on the transmission housing (20, 320).

6. Dual clutch (1) according to Claim 4 or 5, **characterized in that** the clutch housing (8, 308, 408, 608) is received by means of a locating bearing (19) on a projection (20a) which protrudes axially out of the transmission housing (20, 320), such that the said clutch housing (8, 308, 408, 608) is fixed axially and can be rotated with respect to the transmission housing (20, 320).

7. Dual clutch (1) according to one of Claims 1 to 6, **characterized in that** at least one of the friction clutches (3, 4) is a normally closed friction clutch.

8. Dual clutch (1) according to one of Claims 1 to 6, **characterized in that** both friction clutches (3, 4) are normally closed friction clutches, the actuating travels for closing them being directed in opposite directions.

9. Dual clutch (1) according to one of Claims 1 to 8, **characterized in that** the actuating devices (32, 32a) are operated hydrostatically.

10. Dual clutch (1) according to Claim 9, **characterized in that** the common receptacle of the actuating devices (32, 32a) is a slave-cylinder housing (35, 335, 635), in which in each case one externally pressure-loaded slave cylinder (33, 48, 233, 248, 633) is accommodated in order to load in each case one transmission element (30, 42, 430).

11. Dual clutch (1) according to Claim 10, **characterized in that** the slave cylinders (33, 48, 233, 248) have in each case one annular piston (36, 46, 136, 146, 436, 446, 546) which can be displaced axially in a pressure chamber (34, 47), which can be pressure-loaded from outside, and actuates the transmission elements (30, 42, 430) with in each case one actuating bearing (37, 45, 137, 147, 237, 247, 337, 345, 445) being connected in between.

12. Dual clutch (1) according to one of Claims 1 to 11, **characterized in that** the annular space (153, 353, 453, 553, 653) is filled at least partially with a fluid.

13. Dual clutch (1) according to Claim 12, **characterized in that** the fluid has lubricating and/or cooling properties.

14. Dual clutch (1) according to one of Claims 1 to 13, **characterized in that** rolling faces of the actuating bearings (137, 147, 237, 247, 337, 345, 445) and of the supporting bearing (139, 239, 339, 639) are arranged within the annular space (153, 353, 453, 553, 653).

15. Dual clutch (1) according to one of Claims 10 to 14, **characterized in that** the annular space (153, 353, 453, 553) between the clutch housing (8, 308, 408) and the inner circumferences of the annular pistons (136, 146, 436, 446, 546) is sealed by means of in each case one radial shaft seal (158, 159).

16. Dual clutch (1) according to Claim 15, **characterized in that** the annular space (153, 353, 453, 553, 653) is sealed with regard to the clutch housing (8, 308, 408) on an outer ring (162, 262, 362, 662) of the supporting bearing (139, 239, 339, 639).

17. Dual clutch (1) according to either of Claims 15 and 16, **characterized in that** bearing rings (154, 155, 254, 255, 354, 355, 454, 455, 555) of the actuating bearings (137, 147, 237, 247, 337, 345, 445) are sealed with respect to the annular pistons (136, 146, 436, 446, 546) by means of a radial shaft seal (158, 159).

18. Dual clutch (1) according to Claim 17, **characterized in that** bearing rings (154, 155, 254, 255, 354, 355, 454, 455, 555) of the actuating bearings (137, 147, 237, 247, 337, 345, 445) are sealed with respect to an outer ring (162, 262, 362, 662) of the supporting bearing (139, 239, 339, 639) by means of a translatory sealing means.

19. Dual clutch (1) according to Claim 18, **characterized in that** in each case one axial annular flange which is shaped coaxially with respect to an annular flange of the outer ring (162) of the supporting bearing (139) is formed on the bearing rings (154, 155) of the actuating bearings (137, 147), and a translatory sealing means is active between the annular flanges of in each case one bearing ring (154, 155) of an actuating bearing (137, 147) and in each case one of the annular flanges of the outer ring (162) of the supporting bearing (139).

20. Dual clutch (1) according to Claim 19, **characterized in that** the annular flanges are arranged radially within the rolling bodies (168) of the supporting bearing (139).

21. Dual clutch (1) according to one of Claims 18 to 20, **characterized in that** the translatory seal is formed from a sealing lip (165, 166) which is arranged fixedly on an annular flange and seals with respect to a sealing face on the corresponding annular flange.

22. Dual clutch (1) according to Claim 17, **characterized in that** the bearing rings (254, 255) of the actuating bearings (237, 247) form, radially outside the rolling bodies (268) of the supporting bearing (239), the translatory sealing means with respect to the outer ring (262) of the supporting bearing (239).

23. Dual clutch (1) according to Claim 22, **characterized in that** a sealing lip (265, 266) which seals on an inner circumference of the outer ring (262) is arranged on the outer circumference of the bearing rings (254, 255).

24. Dual clutch (1) according to Claim 17 or 18, **characterized in that** in each case one elastic diaphragm is arranged between the clutch housing (308, 408, 608) or the outer ring (362, 662) of the supporting bearing (339, 639) and the bearing rings (354, 355, 455, 555) of the actuating bearings (337, 345, 445).

25. Dual clutch (1) according to Claim 24, **characterized in that** the elastic diaphragm is a folding bellows (365, 366, 465, 466), a rolling diaphragm (465) or a pendulum bellows (566).

26. Dual clutch (1) according to Claim 24 or 25, **characterized in that** in each case one elastic diaphragm is received on an outer circumference of the supporting bearing (339, 639) and on an inner circumference of the outer ring (354, 355) of the respective actuating bearing (337).

27. Dual clutch (1) according to one of Claims 24 to 26, **characterized in that** the elastic diaphragm has at least one recess (369c, 369d) which reaches around a bearing ring.

28. Dual clutch (1) according to one of Claims 24 to 27, **characterized in that** the elastic diaphragm is clamped between at least one bearing ring (455) and a further component (445a) of the actuating or supporting bearing.

29. Dual clutch (1) according to one of Claims 10 to 28, **characterized in that** at least one of the slave cylinders (633) has an annular piston which rotates with the clutch housing (608), the actuating bearing (637) being arranged between a lip seal, with respect to the pressure chamber (634) of the slave cylinder (633), and the annular piston.

30. Dual clutch (1) according to Claim 29, **characterized in that** the annular piston is formed from a bearing ring (654) of the actuating bearing (637) and has a plurality of individual pistons (636) which are distributed over the circumference and are connected fixedly to the transmission element.

31. Dual clutch (1) according to either of Claims 29 and 30, **characterized in that**, in order to form the annular space (653), the slave cylinder (633) has a sheet-metal part (639a) which is fastened to the clutch housing (608), is sealed with respect to the outer ring (662) of the supporting bearing (639) and on the inner circumference of the slave-cylinder housing (635), and, for the passage of the individual pistons (636), has a number of openings (639b) which are sealed with respect to the individual pistons (636), which number corresponds to the number of individual pistons.

32. Dual clutch (1) according to one of Claims 11 to 31, **characterized in that** the actuating bearings (137, 147, 237, 247, 337, 345, 445) are configured as needle bearings or axial ball bearings.

33. Dual clutch (1) according to one of Claims 1 to 32, **characterized in that** the supporting bearing (139, 239, 339, 639) is a two-row anti-friction bearing.

34. Friction clutches (1) having a clutch housing (8, 308, 408, 608) which is driven by a drive and a pressing plate (5) which is connected fixedly thereto, with a pressing face and an axially displaceable pressure plate (24, 25) which faces the pressing face, it being possible for friction linings (28, 29) of a clutch plate (26, 27) which is connected fixedly to a transmission input shaft (21, 22) of a transmission (23) so as to rotate with it to be clamped between the pressure plate (24, 25) and the pressing plate (5) in order to produce a frictional engagement by axial loading of the pressure plate (24, 25) by means of an actuating system (52, 152, 252, 352, 452, 552, 652) which is received on the clutch housing (8, 308, 408, 608) by means of a supporting bearing (39, 139, 239, 339, 639), such that it is fixed axially and can be rotated, and has an actuating device (32, 32a), the pressure plate (24, 25) being actuated by means of a transmission element (30, 42, 430) which is loaded by the actuating device (32, 32a), and the pressure plate (24, 25) being displaced by the same actuating travel which is set at the actuating device (32, 32a), **characterized in that** a sealed annular space (153, 353, 453, 553, 653) is formed between the clutch housing (8, 308, 408, 608) and an outer circumference of the actuating device (32, 32a).

## Revendications

1. Embrayage double (1) comprenant deux embrayages à friction (3, 4), entraînés par une unité d'entraînement, comprenant un carter d'embrayage commun (8, 308, 408, 608) et un plateau de pressage (5), relié fixement à ce dernier, doté de deux surfaces de pressage, ainsi que deux plateaux de pression (24, 25) déplaçables axialement respectivement tournés vers une surface de pressage, des garnitures de friction (28, 29) d'un disque d'embrayage (26, 27) relié de manière solidaire en rotation à un arbre d'entrée de boîte de vitesses respectif (21, 22) d'une boîte de vitesses (23) pouvant être serrées entre un plateau de pression respectif (24, 25) et le plateau de pressage (5) pour former un engagement par friction par sollicitation axiale des plateaux de pression (24, 25) au moyen d'un système d'actionnement (52, 152, 252, 352, 452, 552, 652) reçu de manière fixe axialement et de manière rotative au moyen d'un palier de support (39, 139, 239, 339, 639) sur le carter d'embrayage (8) et doté d'un dispositif d'actionnement respectif (32, 32a), les plateaux de pression (24, 25) étant actionnés au moyen d'éléments de transfert (30, 42, 430) sollicités par les dispositifs d'actionnement (32, 32a) et les plateaux de pression (24, 25) étant déplacés de la même course d'actionnement ajustée au niveau des dispositifs d'actionnement (32, 32a), **caractérisé en ce qu'**un espace annulaire étanche (153, 353, 453, 553, 653) est formé entre le carter d'embrayage (8, 308, 408, 608) et une périphérie extérieure des dispositifs d'actionnement (32, 32a).

2. Embrayage double (1) selon la revendication 1, **caractérisé en ce que** les deux dispositifs d'actionnement (32, 32a) sont disposés au moyen d'un logement commun autour des deux arbres d'entrée de boîte de vitesses (21, 22).

3. Embrayage double (1) selon la revendication 2, **caractérisé en ce que** le logement est reçu de manière rotative sur le carter d'embrayage (8, 308, 408, 608) et est supporté de manière solidaire en rotation sur un boîtier de boîte de vitesses (20, 320) de la boîte de vitesses (23).

4. Embrayage double (1) selon l'une quelconque des revendications 1 à 3, **caractérisé en ce que** le carter d'embrayage (8, 308, 408, 608) est supporté de manière rotative sur un boîtier de boîte de vitesses (20, 320).

5. Embrayage double (1) selon l'une quelconque des revendications 1 à 4, **caractérisé en ce que** le carter d'embrayage (8, 308, 408, 608) comprend un épaulement axial (18, 83) tourné vers la boîte de vitesses (23) sur lequel est reçu le logement et au moyen duquel l'embrayage double (1) est supporté de manière rotative sur le boîtier de boîte de vitesses (20, 320).

6. Embrayage double (1) selon la revendication 4 ou 5, **caractérisé en ce que** le carter d'embrayage (8, 308, 408, 608) est reçu de manière fixe axialement sur un épaulement (20a) faisant saillie axialement hors du boîtier de boîte de vitesses (20, 320) au moyen d'un palier fixe (19) et de manière rotative par rapport au boîtier de boîte de vitesses (20, 320).

7. Embrayage double (1) selon l'une quelconque des revendications 1 à 6, **caractérisé en ce qu'**au moins l'un des embrayages à friction (3, 4) est un embrayage à friction fermé de manière forcée.

8. Embrayage double (1) selon l'une quelconque des revendications 1 à 6, **caractérisé en ce que** les deux embrayages à friction (3, 4) sont des embrayages à friction fermés de manière forcée, les courses d'actionnement pour fermer ces derniers étant orientées en sens contraires.

9. Embrayage double (1) selon l'une quelconque des revendications 1 à 8, **caractérisé en ce que** les dispositifs d'actionnement (32, 32a) fonctionnent de manière hydrostatique.

10. Embrayage double (1) selon la revendication 9, **caractérisé en ce que** le logement commun des dispositifs d'actionnement (32, 32a) est un carter de cylindre récepteur (35, 335, 635) dans lequel est placé un cylindre récepteur (33, 48, 233, 248, 633) respectif sollicité en pression à l'extérieur, en vue de la sollicitation d'un élément de transfert respectif (30, 42, 430).

11. Embrayage double (1) selon la revendication 10, **caractérisé en ce que** les cylindres récepteurs (33, 48, 233, 248) comprennent un piston annulaire respectif (36, 46, 136, 146, 436, 446, 546) qui est déplaçable axialement dans une chambre de pression (34, 47) sollicitée en pression depuis l'extérieur et actionne les éléments de transfert (30, 42, 430) par l'intermédiaire d'un palier d'actionnement respectif (37, 45, 137, 147, 237, 247, 337, 345, 445).

12. Embrayage double (1) selon l'une quelconque des revendications 1 à 11, **caractérisé en ce que** l'espace annulaire (153, 353, 453, 553, 653) est rempli au moins partiellement d'un fluide.

13. Embrayage double (1) selon la revendication 12, **caractérisé en ce que** le fluide présente des propriétés lubrifiantes et/ou refroidissantes.

14. Embrayage double (1) selon l'une quelconque des revendications 1 à 13, **caractérisé en ce que** des surfaces de roulement des paliers d'actionnement (137, 147, 237, 247, 337, 345, 445) et du palier de support (139, 239, 339, 639) sont disposées à l'intérieur de l'espace annulaire (153, 353, 453, 553, 653).

15. Embrayage double (1) selon l'une quelconque des revendications 10 à 14, **caractérisé en ce que** l'espace annulaire (153, 353, 453, 553) entre le carter d'embrayage (8, 308, 408) et les périphéries intérieures des pistons annulaires (136, 146, 436, 446, 546) est rendu étanche au moyen d'une bague d'étanchéité radiale d'arbre respective (158, 159).

16. Embrayage double (1) selon la revendication 15, **caractérisé en ce que** l'espace annulaire (153, 353, 453, 553, 653) est rendu étanche par rapport au carter d'embrayage (8, 308, 408) au niveau d'une bague extérieure (162, 262, 362, 662) du palier de support (139, 239, 339, 639).

17. Embrayage double (1) selon la revendication 15 ou 16, **caractérisé en ce que** des bagues de palier (154, 155, 254, 255, 354, 355, 454, 455, 555) des paliers d'actionnement (137, 147, 237, 247, 337, 345, 445) sont rendues étanches par rapport aux pistons annulaires (136, 146, 436, 446, 546) au moyen d'une bague d'étanchéité radiale d'arbre (158, 159).

18. Embrayage double (1) selon la revendication 17, **caractérisé en ce que** des bagues de palier (154, 155, 254, 255, 354, 355, 454, 455, 555) des paliers d'actionnement (137, 147, 237, 247, 337, 345, 445) sont rendues étanches par rapport à une bague extérieure (162, 262, 362, 662) du palier de support (139, 239, 339, 639) au moyen d'une étanchéification en translation.

19. Embrayage double (1) selon la revendication 18, **caractérisé en ce qu'**une bride annulaire axiale respective formée de manière coaxiale par rapport à une bride annulaire de la bague extérieure (162) du palier de support (139) est formée sur les bagues de palier (154, 155) des paliers d'actionnement (137, 147) et une étanchéification en translation agit entre les brides annulaires d'une bague de palier respective (154, 155) d'un palier d'actionnement (137, 147) et l'une des brides annulaires respectives de la bague extérieure (162) du palier de support (139).

20. Embrayage double (1) selon la revendication 19, **caractérisé en ce que** les brides annulaires sont disposées radialement à l'intérieur des corps de roulement (168) du palier de support (139).

21. Embrayage double (1) selon l'une quelconque des revendications 18 à 20, **caractérisé en ce que** l'étanchéification en translation est réalisée à partir d'une lèvre d'étanchéité (165, 166) qui est disposée fixement sur une bride annulaire et assure l'étanchéité par rapport à une surface d'étanchéité sur la bride annulaire correspondante.

22. Embrayage double (1) selon la revendication 17, **caractérisé en ce que** les bagues de palier (254, 255) des paliers d'actionnement (237, 247) réalisent l'étanchéification en translation par rapport à la bague extérieure (262) du palier de support (239) radialement à l'extérieur des corps de roulement (268) du palier de support (239).

23. Embrayage double (1) selon la revendication 22, **caractérisé en ce qu'**une lèvre d'étanchéité (265, 266) est disposée sur la périphérie extérieure des bagues de palier (254, 255), laquelle lèvre d'étanchéité assure l'étanchéité sur une périphérie intérieure de la bague extérieure (262).

24. Embrayage double (1) selon la revendication 17 ou 18, **caractérisé en ce qu'**une membrane élastique respective est disposée entre le carter d'embrayage (308, 408, 608) ou la bague extérieure (362, 662) du palier de support (339, 639) et les bagues de palier (354, 355, 455, 555) des paliers d'actionnement (337, 345, 445).

25. Embrayage double (1) selon la revendication 24, **caractérisé en ce que** la membrane élastique est un soufflet (365, 366, 465, 466), une membrane déroulante (465) ou un soufflet oscillant (566).

26. Embrayage double (1) selon la revendication 24 ou 25, **caractérisé en ce qu'**une membrane élastique respective est reçue sur une périphérie extérieure du palier de support (339, 639) et sur une périphérie intérieure de la bague extérieure (354, 355) du palier d'actionnement respectif (337).

27. Embrayage double (1) selon l'une quelconque des revendications 24 à 26, **caractérisé en ce que** la membrane élastique comprend au moins un retrait (369c, 369d) venant en prise autour d'une bague de palier.

28. Embrayage double (1) selon l'une quelconque des revendications 24 à 27, **caractérisé en ce que** la membrane élastique est serrée entre au moins une bague de palier (455) et un autre composant (445a) du palier d'actionnement ou de support.

29. Embrayage double (1) selon l'une quelconque des revendications 10 à 28, caractérisé en qu'au moins l'un des cylindres récepteurs (633) comprend un piston annulaire tournant avec le carter d'embrayage (608), le palier d'actionnement (637) étant disposé entre un joint d'étanchéité à lèvre par rapport à la chambre de pression (634) du cylindre récepteur (633) et le piston annulaire.

30. Embrayage double (1) selon la revendication 29, **caractérisé en ce que** le piston annulaire est formé à partir d'une bague de palier (654) du palier d'actionnement (637) et comprend plusieurs pistons individuels (636) répartis sur la périphérie, lesquels sont reliées fixement aux éléments de transfert.

31. Embrayage double (1) selon la revendication 29 ou 30, **caractérisé en ce qu'**en vue de la formation de l'espace annulaire (653), le cylindre récepteur (633) comprend une partie en tôle (639a) fixée au carter d'embrayage (608) et rendue étanche par rapport à la bague extérieure (662) du palier de support (639) et sur la périphérie intérieure du carter de cylindre récepteur (635), laquelle partie en tôle comprend, en vue du passage des pistons individuels (636), un nombre d'ouvertures (639b) correspondant au nombre de pistons individuels, lesquelles ouvertures sont rendues étanches par rapport aux pistons individuels (636).

32. Embrayage double (1) selon l'une quelconque des revendications 11 à 31, **caractérisé en ce que** les paliers d'actionnement (137, 147, 237, 247, 337, 345, 445) sont réalisés sous forme de paliers à aiguilles ou de paliers axiaux à billes.

33. Embrayage double (1) selon l'une quelconque des revendications 1 à 32, **caractérisé en ce que** le palier de support (139, 239, 339, 639) est un palier à roulement à deux rangées.

34. Embrayages à friction (1) comprenant un carter d'embrayage (8, 308, 408, 608) entraîné par un entraînement et un plateau de pressage (5), relié fixement à ce dernier, doté d'une surface de pressage, ainsi qu'un plateau de pression (24, 25) déplaçable axialement tourné vers la surface de pressage, des garnitures de friction (28, 29) d'un disque d'embrayage (26, 27) relié de manière solidaire en rotation à un arbre d'entrée de boîte de vitesses (21, 22) d'une boîte de vitesses (23) pouvant être serrées entre le plateau de pression (24, 25) et le plateau de pressage (5) pour former un engagement par friction par sollicitation axiale du plateau de pression (24, 25) au moyen d'un système d'actionnement (52, 152, 252, 352, 452, 552, 652) reçu de manière fixe axialement et de manière rotative au moyen d'un palier de support (39, 139, 239, 339, 639) sur le carter d'embrayage (8, 308, 408, 608) et doté d'un dispositif d'actionnement (32, 32a), le plateau de pression (24, 25) étant actionné au moyen d'un élément de transfert (30, 42, 430) sollicité par le dispositif d'actionnement (32, 32a) et le plateau de pression (24, 25) étant déplacé de la même course d'actionnement ajustée au niveau du dispositif d'actionnement (32, 32a), **caractérisés en ce qu'**un espace annulaire étanche (153, 353, 453, 553, 653) est formé entre le carter d'embrayage (8, 308, 408, 608) et une périphérie extérieure du dispositif d'actionnement (32, 32a).
